# EUROPEAN PATENT SPECIFICATION

(11) **EP 0 425 684 B1**
(45) Date of publication and mention of the grant of the patent: **14.12.1994**
(21) Application number: 90904937.1
(22) Date of filing: 23.03.1990
(51) Int. Cl.: F16K 11/07

(54) **VALVE APPARATUS AND HYDRAULIC DRIVE SYSTEM**
VENTILANORDNUNG UND HYDRAULISCHES ANTRIEBSSYSTEM
SOUPAPE ET SYSTEME DE COMMANDE HYDRAULIQUE

(30) Priority: 24.03.1989 JP 70396/89
(43) Date of publication of application: 08.05.1991
(73) Proprietor: HITACHI CONSTRUCTION MACHINERY CO., LTD., Chiyoda-ku Tokyo 100 (JP)
(72) Inventor: HIRATA, Toichi, Ibaraki 300-12 (JP); SUGIYAMA, Genroku, Inashiki-gun Ibaraki 300-04 (JP)
(74) Representative: Beetz & Partner Patentanwälte
(86) International application number: PCT/JP90/00391
(87) International publication number: WO 90/11464

(56) References cited:
- US-A- 2 403 519
- US-A- 2 986 166

## Description

The invention relates to a valve apparatus for use in hydraulic drive systems according to the first part of claim 1 and to a hydraulic drive system having incorporated therein the valve apparatus, which are suitable for use in a working machine such as a construction machine, an industrial machine or the like in which a plurality of working elements are hydraulically driven.

As a representative example of a working machine in which a plurality of working elements are hydraulically driven, there are construction machines such as a hydraulic excavator, a hydraulic crane and so on. Each of these construction machines is equipped with a hydraulic drive system which is provided with a plurality of actuators for driving the plurality of working elements. In the hydraulic drive system, driving of the plurality of actuators is controlled by a plurality of directional control valves for controlling flows of hydraulic fluid delivered from a hydraulic pump.

By the way, as the hydraulic drive system of this kind, there is a system called a load sensing system in which, as disclosed, in the JP-A-60-11706, a pump delivery flow rate is controlled such that a differential pressure between a delivery pressure of the hydraulic pump and a maximum load pressure of a plurality of actuators (a load pressure of a corresponding actuator in the case of individual operation) is retained to a prescribed value, so that the flow rate required for driving the actuators is delivered from the hydraulic pump. In the load sensing system, it is preferable to use a directional control valve of closed center type in which the spool closes the respective ports at a neutral position to prevent flow of the hydraulic fluid. Thus, unnecessary discharge of hydraulic fluid at the time each directional control valve is in the neutral position is minimized, so that unloading operation of the hydraulic pump is made possible in combination with an unloading valve.

On the other hand, the plurality of directional control valves used in the hydraulic drive system are, in practice, formed as a valve apparatus in which the directional control valves are arranged collectively. The conventional valve apparatus having the directional control valves of closed center type are known from the JP-A-49-19282 and the JP-A-54-59575. The conventional valve apparatus comprises a casing formed therein with a plurality of parallel spool bores arranged in a single row, a single common pump port, at least one tank port and a plurality of actuator ports with each pair associated with a single spool bore, and a plurality of spools slidably inserted respectively in the spool bores in the casing. The spools form respectively a plurality of directional control valves of closed center type, and each spool controls the communication between the common pump port and tank port and the corresponding pair of the actuator ports. The common pump port communicates with a common pimp line which extends perpendicularly to the plurality of parallel spool bores arranged in the single row, and successively passes through the spool bores.

However, the above-described conventional valve apparatus has the following problems.

The conventional valve apparatus is arranged such that the common pump line extends perpendicularly to the plurality of parallel spool bores arranged in the single row, and successively passes through the spool bores. For this reason, when the hydraulic fluid flows into the spools in the bores through the pump line, the hydraulic fluid surely passes through narrow grooves around one or more spools located upstream of the spool remotest from the pump port. Accordingly, pressure losses are large to cause an energy loss. Further, since temperature is raised due to an increase in heat generation, the reliability of the valve apparatus is deteriorated.

Furthermore, since the pressure losses are caused due to passing of the hydraulic fluid through the spools, the more the spools are positioned downstream, the more the pressure losses increase. For this reason, in the case where the valve apparatus is used in the load sensing system, since a differential pressure between the pump delivery pressure and the load pressure is retained to a prescribed value, differential pressures across the downstream spools having their respective large pressure losses are reduced so that, even if the spools are operated to their respective maximum openings, sufficient passing flow rate cannot correspondingly be obtained. Thus, the actuators cannot be driven at the maximum speed, so that operability is reduced. Further, since the pressure losses are not constant for all of the spools, in the case where the plurality of actuators are driven simultaneously, a difference in the differential pressure across each spool occurs in accordance with a difference in the pressure losses. For this reason, the characteristic of the passing flow rate with respect to the operational amounts of the respective spools differs spool by spool, so that a problem occurs in the operability of the simultaneous driving of the plurality of actuators.

Moreover, in the case where the pair of spools of the valve apparatus control left- and right-hand traveling motors of a construction vehicle as directional control valves, the differential pressures are different from each other between the pair of spools as described above. Accordingly, the flow rates of the hydraulic fluid supplied respectively to the left- and right-hand traveling motors are different from each other, so that the traveling direction is brought to such a condition as to be bent naturally. That is, it becomes difficult to secure lineality of the traveling.

The US-A-2 986 166 as closest prior art-discloses a hydraulic drive system for the operation of several different working units, connected to a single hydraulic pump. The valve apparatus of said driving system comprises a directional control valve of the open center type having in a common casing two spool bores arranged in a juxtaposed relation to each other, and spools disposed in the spool bores for controlling the hydraulic communication between said pump, said working devices and a tank.

It is an object of the invention to provide a valve apparatus having a plurality of directional control valves of closed center type arranged collectively and a hydraulic drive system provided with the valve apparatus, in which, a pressure loss between a pump port and a plurality of spools is relatively small and substantially the same for all of the spools to improve the operability.

It is another object of the invention to provide a hydraulic drive system having a plurality of directional control valves of closed center type arranged collectively, in which it is possible to secure lineality of traveling when left- and right-hand motors are controlled.

For the above purposes, according to the invention, there is provided a valve apparatus comprising a casing formed therein with a plurality of spool bores, a single common pump port, at least one tank port and a plurality of actuator ports including a pair of actuator ports communicating with one of the spool bores, and a plurality of spools slidably inserted respectively in the spool bores in the casing, each of the spools controlls the communication between the common pump port, the tank port and the corresponding pair of actuator ports to provide a directional control valve of closed center type, wherein a plurality of pairs of spool bores are arranged in juxtaposed relation to each other, each pair of spool bores having axes located in a plane, and the plurality of spools include at least one set of pair of corresponding spools arranged in juxtaposed relation to each other, and the common pump port is arranged to communicate with a common pump line formed between the pairs of spool bores and spools arranged in juxtaposed relation so as to intersect the plane in which the axes of the pair of spool bores are located, said pump line is formed to communicate with the set of pair of spool bores arranged in juxtaposed relation through respective branch lines.

Preferably, the common pump line extends in a direction perpendicular to the plane in which the axes of the pair of spool bores arranged in juxtaposed relation are located.

Further, preferably, the plurality of spool bores include a plurality of sets of pairs of spool bores each pair arranged in juxtaposed relation to each other, the respective sets of pairs of spool bores having axes located respectively in planes arranged in juxtaposed parallel relation to each other, and the common pump line is formed between the pair of spool bores arranged in juxtaposed relation in each set so as to intersect the planes arranged in juxtaposed relation.

Moreover, preferably, the pair of actuator ports communicating with each of the spool bores are positioned at a side of the pair of spools inserted respectively in the pair of spool bores opposite to the side thereof where the pair of spools face toward each other.

Preferably, the set of pair of spools arranged in juxtaposed relation provide directional control valves for controlling a pair of traveling motor of a construction vehicle.

Further, for the above purposes, according to the invention, there is provided a hydraulic drive system comprising a hydraulic pump, a plurality of hydraulic actuators driven by hydraulic fluid delivered from the hydraulic pump, a plurality of directional control valves of closed center type for respectively controlling flows of the hydraulic fluid supplied to the plurality of actuators from the hydraulic pump, and pressure compensating means for retaining a differential pressure between a delivery pressure of the hydraulic pump and a maximum load pressure of the actuators, to a prescribed value, wherein the plurality of directional control valves of closed center type are formed by the above-mentioned valve apparatus.

### BRIEF DESCRIPTION OF THE DRAWINGS

Fig. 1 is a cross-sectional view of a valve apparatus according to an embodiment of the invention;
Fig. 2 is a cross-sectional view taken along the line II - II in Fig. 1, the line I - I in the figure representing the cross-sectional line in Fig. 1;
Fig. 3 is a circuit view showing an example of a hydraulic drive system which is formed by the use of the valve apparatus illustrated in Fig. 1;
Fig. 4 is a cross-sectional view similar to Fig. 1, but showing a valve apparatus according to another embodiment of the invention; and
Fig. 5 is a circuit view showing an example of a hydraulic drive system which is formed by the use of the valve apparatus illustrated in Fig. 4.

### BEST MODE FOR CARRYING OUT THE INVENTION

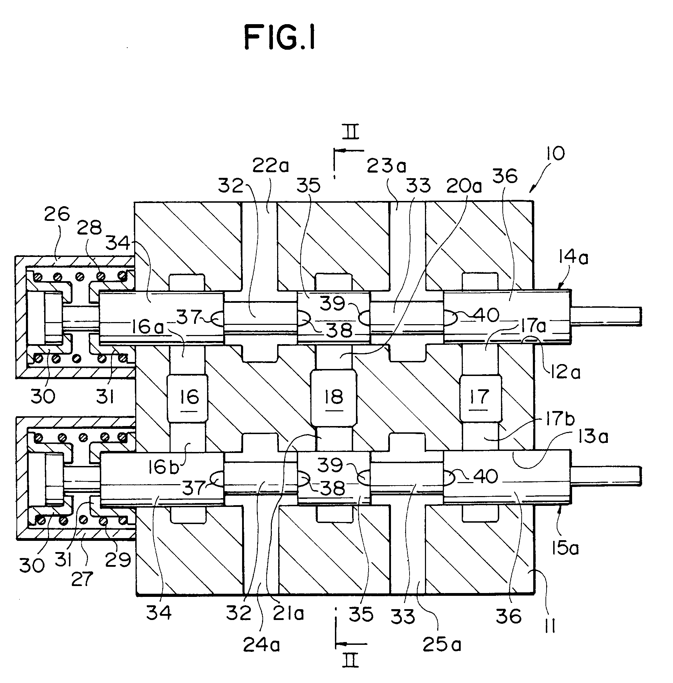

Embodiments of the invention will be described below with reference to Figs. 1 through 3.

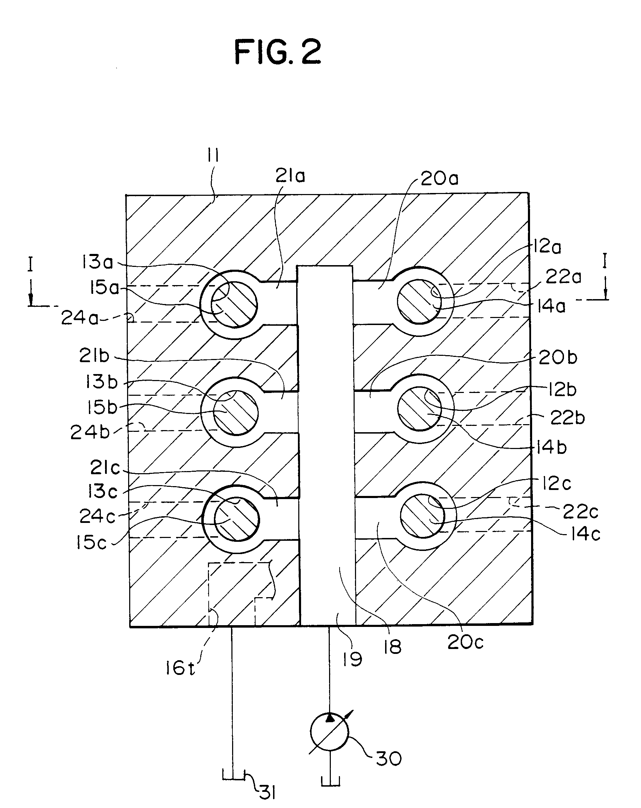

In Figs. 1 and 2, the reference numeral 10 denotes a valve apparatus according to an embodiment of the invention. The valve apparatus 10 comprises a casing 11 in the form of a rectangular parallelopiped. The casing 11 is formed therein with three sets of pairs of spool bores each pair arranged in juxtaposed relation to each other, that is, a first set of spool bores 12a and 13a, a second set of spool bores 12b and 13b, and a third set of spool bores 12c and 13c. Inserted slidably in these spool bores are likewise three sets of pairs of spools each pair arranged in juxtaposed relation to each other, that is, a first set of spools 14a and 15a, a second set of spools 14b and 15b and a third set of spools 14c and 15c. These spool bores 12a and 13a; 12b and 13b; and 12c and 13c are arranged such that a pair of axes of the first set of spool bores 12a and 13a, a pair of axes of the second set of spool bores 12b and 13b and a pair of axes of the third set of spool bores 12c and 13c are located respectively in three planes which are arranged in juxtaposed relation to each other.

The casing 11 is also formed therein with a pair of tank lines 16 and 17 which extend between the pairs of spool bores 12a and 13a; 12b and 13b; and 12c and 13c in each set adjacent opposed ends of the respective spool bores in a direction perpendicular to the above-mentioned three planes. These tank lines 16 and 17 are connected to a common tank port 16t which opens in a side surface of the casing 11 perpendicular to the tank lines 16 and 17. Further, the tank lines 16 and 17 communicate with the spool bores 12a and 13a through branch lines 16a and 16b and 17a and 17b and, likewise, communicate with the other sets of spool bores 12b and 13b and 12c and 13c through branch lines (not shown).

Furthermore, the casing 11 is formed therein with a single common pump line 18 which extends between the pairs of spool bores 12a and 13a; 12b and 13b; and 12c and 13c in each set adjacent axially central sections of the respective spool bores in a direction perpendicular to the above-mentioned planes. The pump line 18 is connected to a pump port 19 which opens in the side surface of the casing 11 perpendicular to the pump line 18. The pump line 18 communicates with the spool bores 12a and 13a; 12b and 13b; and 12c and 13c through respective branch lines 20a and 21a; 20b and 21b; and 20c and 21c.

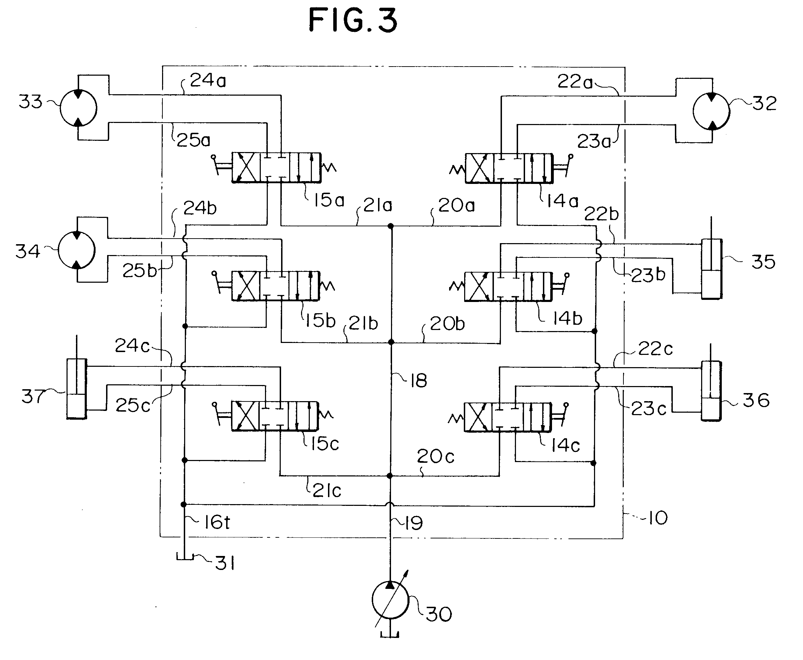

Moreover, the casing 11 is formed therein with two pairs of actuator ports 22a and 23a and 24a and 25a which extend in a direction perpendicular to the first set of spool bores 12a and 13a and communicate therewith. The actuator ports 22a and 23a are positioned at a side of the spools 14a and 15a inserted in the spool bores 12a and 13a opposite to the side thereof where the spools 14a and 15a face toward each other, and open in a side surface of the casing 11. Likewise, the actuator ports 24a and 25a are positioned at a side of the spools 14a and 15a opposite to the side where the spools 14a and 15a face toward each other, and open to a side surface of the casing 11. In a similar manner, four pairs of actuator ports 22b, 23b, 24b and 25b; and 22c, 23c, 24c and 25c (see Fig. 3 with reference to 23b, 25b, 23c and 25c) are formed also with respect to the other sets of spool bores 12b and 13b and 12c and 13c, respectively.

A pair of covers 26 and 27 are fixedly mounted to the side surface of the casing 11 from which one ends of the respective spools 14a and 15a project, for covering respectively the one ends of the respective spools. Within the covers 26 and 27, a pair of switching set springs 28 and 29 are mounted respectively on one ends of the spools 14a and 15a through respective pairs of spring retainers 30 and 31, for holding or retaining neutral positions of the respective spools 14a and 15a. The other ends of the spools 14a and 15a are connected to operational handles (not shown). Further, each of the spools 14a and 15a is formed with a pair of smaller-diameter sections 32 and 33 and three lands 34, 35 and 36 which are divided by the smaller-diameter sections 32 and 33. Notches 37, 38, 39 and 40 each forming a variable restrictor are formed respectively at end portions of the lands 34, 35 and 36 adjacent the smaller-diameter sections 32 and 33. Although not shown, similar components or parts are provided on each of the other spools 14b and 15b and 14c and 15c, and similar configurations are given respectively to each of the other spools 14b and 15b and 14c and 15c.

In the valve apparatus 10 constructed as above according to the embodiment, hydraulic fluid flowing through the pump port 19 passes through the pump line 18 and the branch lines 20a ∼ 21c, and is introduced to the spools 14a ∼ 15c. At this time, the pump line 18 extends between the pairs of spool bores 12a and 13a; 12b and 13b; and 12c and 13c in the respective sets, and communicates with the spool bores 12a ∼ 13c through the branch lines 20a ∼ 21c. Accordingly, the hydraulic fluid does not pass through the spools, unlike the conventional apparatus. Thus, a pressure loss of the hydraulic fluid flow from the pump port 19 to each of the spools 14a ∼ 15c is extremely small. For this reason, an energy loss is small, and heat generation is reduced to the minimum, so that the reliability of the valve apparatus is improved. Further, a service life of various instruments is prolonged.

Moreover, distances from the pump line 18 to the respective spools 14a ∼ 15c, that is, lengths of the respective branch lines 20a ∼ 21c are all the same his each other. Accordingly, the pressure loss of the hydraulic fluid flow from the pump line 18 to the respective spools 14a ∼ 15c are substantially the same as each other. For this reason, in the case where the pair of spools of the valve apparatus 10 control left-and right-hand traveling motors for a construction vehicle as directional control valves, differential pressures across the pair of spools become substantially the same as each other. Thus, flow rates of the hydraulic fluid supplied respectively to the left- and right-hand traveling motors become substantially the same as each other, so that lineality of the traveling can easily be secured. This will be described below in detail with reference to Fig. 3.

Fig. 3 shows a circuit arrangement in which the valve apparatus 10 according to the embodiment is applied to a hydraulic drive system for a hydraulic excavator. A hydraulic pump 30 of variable displacement type is connected to the pump port 19 of the valve apparatus 10, and a tank 31 is connected to the tank port 16t. Further, left- and right-hand traveling motors 32 and 33 are connected respectively to the actuator ports 22a and 23a and 24a and 25a which are associated respectively with the spools 14a and 15a. A swing motor 34 is connected to the actuator ports 24b and 25b which are associated with the spool 15b. A boom cylinder 35, an arm cylinder 36 and a bucket cylinder 37 are connected respectively to the actuator ports 22b and 23b; 22c and 23c; and 24c and 25c which are associated respectively with the spools 14b, 14c and 15c. The left- and right-hand traveling motors 32 and 33, the swing motor 34, the boom cylinder 35, the arm cylinder 36 and the bucket cylinder 37 are driven whereby left-and right-hand travel devices, a swing, a boom, an arm and a bucket, which are hydraulic driven elements for the hydraulic excavator, are driven.

In the hydraulic drive system constructed as described above, if the directional control valves formed respectively by the spools 14a and 15a are operated by the same amount in an attempt, for example, at linear traveling of the hydraulic excavator, the hydraulic fluid delivered from the hydraulic pump 30 passes through the spools 14a and 15a via the pump port 19, the pump line 18 and the branch lines 20a and 21a, and is supplied to the left- and right-hand traveling motors 32 and 33, whereby the left- and right-hand motors 32 and 33 are driven so that the hydraulic drive system travels. At this time, since, as described above, the pressure losses of the flow from the pump port 19 to the spools 14a and 15a are the same as each other, the differential pressures across the respective spools 14a and 15a become substantially the same as each other, so that the hydraulic fluid is supplied by equal amount to the left- and right-hand traveling motors 32 and 33. Thus, the left- and right-hand traveling motors 32 and 33 are driven at the same or equal speed, so that it is possible to linearly travel the hydraulic drive system.

In connection with the above, this is the same if the left- and right-hand traveling motors 32 and 33 are connected to any actuator ports. For instance, even if the left-hand-traveling motor 32 is connected to the illustrated actuator ports 22a and 23a, and if the right-hand traveling motor 33 is connected to the actuator ports 24c and 25c which are associated with the spool 15c remotest from the spool 14a, the pressure losses of the hydraulic fluid flow from the pump port 19 to the respective spools 14a and 15c are substantially the same as each other as described above, so that the linear traveling is likewise made possible. Accordingly, according to the embodiment, since restriction in positions of the ports to be connected to the actuators is released, there is also provided such an advantage that a degree of freedom of the design increases.

Further, according to the embodiment, the three sets of spool bores 12a ∼ 13c are provided as each set including the pair of spools arranged in juxtaposed relation to each other, and the actuator ports 22a ∼ 25c are arranged respectively at the sides of the pairs of spools 14a ∼ 15c inserted respectively in the pairs of spool bores opposite to the side thereof where the pairs of spools face toward each other. By doing so, the wall thicknesses of the casing 11 required for strength on the side of the actuator ports are the same as those of the conventional apparatus, but, with reference to the wall thickness of the casing 11 required for strength on the side of the spools opposite to the actuator ports, it can be automatically secured for one of the pair of spools in each set if the wall thickness for the other spool is secured. Specifically, the wall thickness portion of the casing 11 between each pair of spools serves as a strength element common to both the spools. For this reason, the weight of the casing 11 can considerably be reduced as compared with, for example, the conventional six-series valve apparatus. Further, it is possible to collect the entire valve apparatus compact.

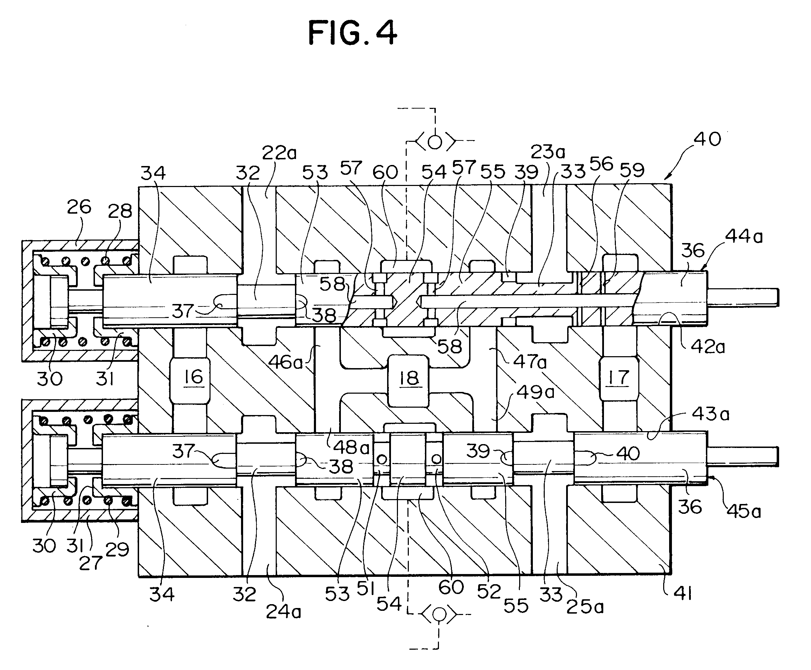

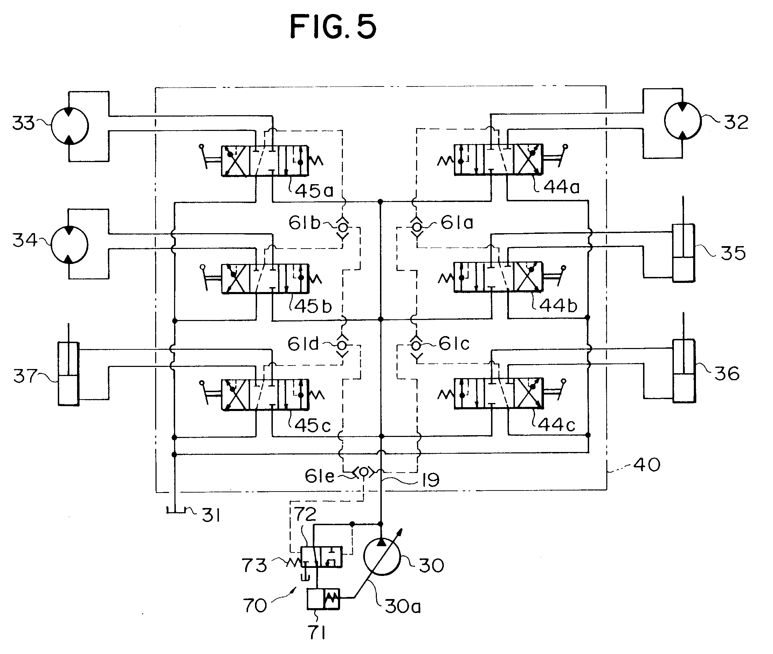

Another embodiment of the invention will be described with reference to Figs. 4 and 5. In these figures, components and parts like or similar to those illustrated in Figs. 1 through 3 are designated by the same reference numerals. The embodiment is arranged such that means for extracting a load pressure is provided, and consideration is made for application to a load sensing system.

In Fig. 4, similarly to the embodiment described previously, a casing 41 of a valve apparatus 40 is formed therein with three sets of spool bores 42a and 43a (only one set shown) each having a pair of spool bores arranged in juxtaposed relation to each other. Spools 44a and 45a each forming a directional control valve are slidably inserted respectively in the spool bores 42a and 43a. Further, the pump line 18 is arranged to communicate with each of the spool bores 42a and 43a through two pairs of branch lines 46a and 47a; and 48a and 49a.

On the other hand, of three lands of each of the spools 44a and 45a, which are divided by the pair of smaller-diameter sections 32 and 33, the central land is further divided into three lands 53, 54 and 55 by a pair of smaller-diameter sections 51 and 52. The branch lines 46a and 47a; or 48a and 49a of the pump line described above communicate respectively with bore sections at which both the lands 53 and 55 are located.

Each of the spools 44a and 45a is formed therein with respective pairs of radial passages 56 and 57 and a pair of axial passages 58 corresponding to the actuator ports 22a and 23a; or 24a and 25a, which respectively form load lines for extracting pressures within the actuator ports 22a and 23a; or 24a and 25a, that is, load pressures within the actuators connected to these ports upon operation of the spools. Each of the spools 44a and 45a is further formed therein with a pair of radial passages 59 for causing the pressures of the respective load lines to be released to a tank through the respective tank lines 16 and 17 at the neutral position of the spools. Of the radial passages for the load lines, the passages 57 near the center of the spool 44a or 45a open respectively to the smaller-diameter sections 51 and 52, and the casing 41 is formed therein with a pair of grooves 60 each of which is capable of communicating with the radial passages 57 through the smaller-diameter sections 51 and 52.

In the valve apparatus 40 constructed as above, when, for example, the spool 44a is moved to the left in the figure, the branch line 47a and the actuator port 23a communicate with each other through the notches 39. Flow rate in proportion to the operational amount of the spool 44a flows from the pump line 18 to the actuator port 23a, so that the actuator connected to the actuator port 23a is driven. Simultaneously, the load pressure of the actuator is generated at the actuator port 23a, so that the load pressure is transmitted to the groove 60 through the passages 56, 58 and 57 of the load lines. The load pressure transmitted to the groove 60 is further introduced to the outside through a plurality of shuttle valves which are incorporated in the valve apparatus 40. The shuttle valves are schematically shown in Fig. 4 by the double dotted lines. When the spool 44a is moved to the right in the figure, the load pressure in the actuator port 22a is likewise introduced to the groove 60. Moreover, when the plurality of spools are operated so that the load pressures of the plurality of the actuators are extracted, the maximum pressure of these load pressures is selected by the plurality of shuttle valves, and is delivered to the outside.

An example is shown in Fig. 5, in which the valve apparatus 40 according to the embodiment is used to form a hydraulic drive system of load sensing type. This is also an example of the hydraulic drive system for the hydraulic excavator. Similarly to Fig. 3, the left- and right-hand traveling motors 32 and 33, the swing motor 34, the boom cylinder 35, the arm cylinder 36 and the bucket cylinder 37 are connected to the valve apparatus 40. Further, the other two sets of spools 44b and 45b; and 44c and 45c, which are not shown in Fig. 4, are illustrated in Fig. 5, and the above-described shuttle valves are designated by the reference numerals 61a ∼ 61e.

The delivery rate of the hydraulic pump 30 is controlled by a pump regulator 70 of load sensing type. The pump regulator 70 comprises a work cylinder 71 connected to a swash plate 30a of the hydraulic pump 30 for driving the swash plate 30a. Hydraulic fluid is supplied to a chamber within the work cylinder 71 on the side of a bottom thereof through a control valve 72 for driving the work cylinder 71. Delivery pressure of the hydraulic pump 30 is introduced into one of a pair of opposed drive sections of the control valve 72, and the load pressure extracted by the above-described load lines and the shuttle valves 61a ∼ 61e is introduced into the other drive section. Moreover, a spring 73 is arranged at the drive section located on the side where the load pressure is introduced, for setting a load sensing differential pressure.

When the load pressure introduced into the control valve 72 are raised, the latter is driven to the right in the figure, so that the hydraulic fluid is supplied to the chamber within the work cylinder 72 on the side of the bottom thereof to increase the tilting angle of the swash plate 30a. Conversely, when the load pressures decrease, the control valve 72 is driven to the left in the figure, so that the hydraulic fluid on the side of the bottom of the work cylinder 71 is discharged to the tank to reduce the tilting angle of the swash plate 30a. In this manner, the pump delivery amount is controlled, and the differential pressure between the pump delivery pressure and the load pressure is retained at a value set by the spring 73.

Also in the embodiment constructed as above, since the fundamental or basic construction is the same as that of the embodiment illustrated in Figs. 1 through 3, similar advantages can be obtained. Particularly, also in the case where the hydraulic drive system of load sensing type shown in Fig. 5 is constructed by the valve apparatus 40 according to the embodiment, the pressure losses of the hydraulic fluid flow from the pump port 19 to the respective spools 14a ∼ 15c are substantially the same as each other for all of the spools. Accordingly, if the spools 44a and 45a are operated by the same amount, the flow rates of the hydraulic fluid supplied to the left- and right-hand traveling motors 32 and 33 become substantially the same as each other, so that it is possible to secure the lineality of the traveling. Further, since the left-and right-hand traveling motors 32 and 33 may be connected to any actuator ports, the degree of freedom of the design is enhanced.

Moreover, the following further advantages can be obtained according to the embodiment.

The differential pressure between the pump delivery pressure and the load pressure is retained at the prescribed value of the spring 73 in the load sensing system as described above. Accordingly, if, the more the spools are positioned downstream and the pressure losses increase like the conventional valve apparatus in which the pump line passes through the spools, the differential pressures across the spools on the downstream side in which the pressure losses are large become small, so that, even if the spools are operated to their respective maximum openings, no corresponding sufficient passing flow rate can be obtained. Thus, it is made impossible to drive the actuators at the maximum speed. To the contrary, in the embodiment, since the pressure losses of the flow from the pump port 19 to the respective spools 44a ∼ 45c are extremely small, the differential pressures across the spools are brought to a sufficient value which substantially corresponds to the prescribed value of the spring 73. If the spools are operated to the maximum openings, the actuators can be driven at the maximum speed so that the operability is improved.

Furthermore, when the plurality of actuators are driven simultaneously, a difference occurs in the differential pressure across each spool in accordance with a difference in the pressure loss in the conventional valve apparatus. Accordingly, in the case where the same spool is used, the characteristic of the passing flow rate with respect to the operational amount of the spool differs spool by spool. Thus, a problem occurs in the operability of the simultaneous operation of the plurality of actuators. According to the embodiment, the pressure losses of the hydraulic fluid flow from the pump port 19 to the respective spools 14a ∼ 15c are substantially the same as each other for all of the spools. Thus, if the load pressure is the same, the differential pressures across the respective spools become substantially the same as each other, so that the characteristics of the passing flow rates with respect to the operational amounts of the spools also become the same as each other. For this reason, the operability of the simultaneous driving of the plurality of actuators is improved and, since the same spools can be used, there is obtained such an advantage as to reduce the cost.

In the above-described embodiments, the pump line is so formed as to extend in the direction perpendicular to the plane in which the axes of the spool bores in each set arranged in juxtaposed relation are located.

Further, the branch lines from the pump line to the respective spool bores are substantially the same in length as each other. However, the lengths of the branch lines may be altered or modified within a range of the intended purpose of the invention.

Furthermore, the operation of the spools is made by the manual operation due to the operational handles. It is needless to say, however, that the operation of the spools may be other optional operational systems such as pilot operation, solenoid operation and so on. Moreover, in the case where the valve apparatus according to the invention is used in the load sensing system, a plurality of pressure compensating valves may be incorporated in the valve apparatus.

### INDUSTRIAL APPLICABILITY

According to the invention, since the pump line is connected to each spool without passing through the other spools, the pressure loss between the pump port and each spool is reduced and the energy loss is reduced, and further the heat generation becomes also small, so that the reliability of the valve apparatus is improved and the service life of the instruments is prolonged.

Further, in the case where the valve apparatus is used in control of the traveling device, the lineality of the traveling is improved.

Furthermore, in the case where the valve apparatus is used in the hydraulic drive system of load sensing type, the actuators can be driven at sufficient speed, and the operability of the simultaneous driving of the plurality of actuators is improved.

## Claims

1. Valve apparatus comprising
- a common casing (11; 41),
- at least one pair of spool bores (12a to 13c; 42a, 43a) arranged in a juxtaposed relation to each other in said casing (11; 41),
- a common pump port (19) and at least one tank port (16t) in said casing (11; 41),
- a plurality of actuator ports (22a-25c), at least one pair of said actuator ports communicates with one of said spool bores and
- a plurality of spools (14a-15c; 44a, 45a) slidably disposed in said spool bores, respectively, each of said spools controls a communication between said pump port (19), said tank port(s) (16t) and the corresponding pair of said actuator ports,
**characterized** in that
- a plurality of pairs of spool bores (12a to 13c) are arranged in the casing (11, 41) so that the length axes of said pairs of spool bores define planes arranged in juxtaposed relation to each other,
- the common pump port (19) communicates with a common pump line (18) arranged in the casing (11, 41) between the plurality of pairs of spool bores (12a to 13c) perpendicular to said planes of the length axes of said pairs of spool bores,
- said common pump line (18) is connected to each of said spool bores by at least one branch line (20a to 21c) respectively, and
- the valve apparatus provides a directional control valve of the closed center type.

2. Valve apparatus according to claim 1,
characterized in that
a pair of tank lines (16, 17) are formed in the casing (11) between the pairs of spool bores (12a to 13c) and are connected to each of said spool bores (12a to 13c) by branch lines (16a to 17b).

3. Valve apparatus according to claim 1 or 2,
characterized in that
the pair of actuator ports (22a-c and 23a-c) of one of each pair of spool bores (12a-c) opens to one side surface of the rectangular casing (11) and the pair of actuator ports (24a-c; 25a-c) of the other of each pair of spool bores (13a-c) opens to the opposite side surface of the casing (11).

4. Valve apparatus according to one of the claims 1 to 3,
characterized in that
at least one pair of covers (26, 27) are mounted to a side surface of the casing (11) for covering the projecting end portions of the spools, respectively in said covers (26, 27) are mounted switching springs (28, 29) and spring retainers (30, 31) coupled with the projecting end portions of said spools.

5. Valve apparatus according to one of the claims 1 to 4,
characterized in that
the common pump line (18) is connected to the plurality of pairs of spool bores (42a, 43a) by pairs of branch lines (46a to 49a) and that the central lands of at least one pair of said spools (44a, 45a) are divided in three land portions (53, 54, 55), said branch lines (46a, 47a or 48a, 49a) communicate with such sections of spool bores at which the both outer lands (53, 55) are located.

6. Valve apparatus according to claim 5,
characterized in that
the load pressure acting on one of the actuator ports (23a) will be transmitted through passages (56, 58, 57) formed in the spools (44a, 45a) to grooves (60) formed around the central land portion (54) of said spools (44a, 45a) and connected to outside shuttle valves (61).

7. Valve apparatus according to claims 1 to 6,
characterized in that
said pairs of spools (14a, 15a; 44a, 45a) arranged in juxtaposed relation provide directional control valves for controlling a pair of traveling motors of a construction vehicle.

8. A hydraulic drive system comprising a hydraulic pump (30), a plurality of hydraulic actuators (32-37) driven by hydraulic fluid delivered from said hydraulic pump, a plurality of directional control valves (44a-45c) of closed center type for respectively controlling flows of the hydraulic fluid supplied to said plurality of actuators from said hydraulic pump, and pressure compensating means (70) for retaining a differential pressure between a delivery pressure of said hydraulic pump and a maximum load pressure of said actuators, to a prescribed value, and further comprising a valve apparatus (10; 40) providing said plurality of directional control valves of closed center type, and having the features as defined in claim 1.

## Patentansprüche

1. Ventilvorrichtung mit
- einem gemeinsamen Gehäuse (11; 41),
- mindestens einem Paar von Schieberbohrungen (12a bis 13c; 42a 43a), die in Juxtaposition zueinander in dem Gehäuse (11; 41) angeordnet sind,
- einem gemeinsamen Pumpenanschluß (19) und mindestens einem Tankanschluß (16t) in dem Gehäuse (11; 41),
- einer Mehrzahl von Betätigeranschlüssen (22a - 25c), wobei zumindest ein Paar von Betätigeranchlüssen mit einer der Schieberbohrungen in Verbindung steht und
- einer Mehrzahl von jeweils verschiebbar in den Schieberbohrungen angeordneten Schiebern (14a - 15c; 44a, 45a), wobei jeder der Schieber eine Verbindung zwischen dem Pumpenanschluß (19), dem Tankanschluß (den Tankanschlüssen) (16t) und dem entsprechenden Paar von Betätigeranschlüssen steuert,
**dadurch gekennzeichnet, daß**
- eine Mehrzahl von Paaren von Schieberbohrungen (12a bis 13c) in dem Gehäuse (11; 41) angeordnet ist, so daß die Längsachsen der Paare von Schieberbohrungen Ebenen definieren, die in Juxtaposition zueinander angeordnet sind,
- der gemeinsame Pumpenanschluß (19) mit einer gemeinsamen Pumpenleitung (18) in Verbindung steht, die in dem Gehäuse (11; 41) senkrecht zu den Ebenen der Längsachsen der Paare von Schieberbohrungen zwischen der Mehrzahl von Paaren von Schieberbohrungen (12a bis 13c) angeordnet ist,
- die gemeinsame Pumpenleitung (18) durch jeweils mindestens eine Zweigleitung (20a bis 21c) mit jeder der Schieberbohrungen verbunden ist, und
- die Ventilvorrichtung ein Wegeventil des Typs mit geschlossenem Zentrum bildet.

2. Ventilvorrichtung nach Anspruch 1,
dadurch gekennzeichnet, daß
ein Paar von Tankleitungen (16, 17) zwischen den Paaren von Schieberbohrungen (12a bis 13c) in dem Gehäuse (11) ausgebildet und durch Zweigleitungen (16a bis 17b) mit jeder der Schieberbohrungen (12a bis 13c) verbunden ist.

3. Ventilvorrichtung nach Anspruch 1 oder 2,
dadurch gekennzeichnet, daß
sich das Paar von Betätigeranschlüssen (22a - c und 23a - c) des einen von jedem der Paare von Schieberbohrungen (12a - c) zu einer Seitenfläche des rechteckigen Gehäuses (11) öffnet und sich das Paar von Betätigeranschlüssen (24a - c und 25a - c) des anderen von jedem der Paare von Schieberbohrungen (13a - c) zu der gegenüberliegenden Seitenfläche des Gehäuses (11) öffnet.

4. Ventilvorrichtung nach einem der Ansprüche 1 bis 3,
dadurch gekennzeichnet, daß
zum Abdecken der vorstehenden Endabschnitte der Schieber mindestens ein Paar von Deckeln (26, 27) an einer Seitenfläche des Gehäuses (11) befestigt ist, wobei in den Deckein (26, 27) jeweils Schaltfedern (28, 29) und Federhalterungen (30, 31) angeordnet sind, die mit den vorstehenden Endabschnitten der Schieber gekoppelt sind.

5. Ventilvorrichtung nach einem der Ansprüche 1 bis 4,
dadurch gekennzeichnet, daß
die gemeinsame Pumpenleitung (18) durch Paare von Zweigleitungen (46a bis 49a) mit der Mehrzahl von Paaren von Schieberbohrungen (42a, 43a) verbunden ist, und daß die mittleren Stege von mindestens einem Paar der Schieber (44a, 45a) in drei Stegabschnitte (53, 54 und 55) unterteilt sind, wobei die Zweigleitungen 46a, 47a oder 48a, 49a) mit den Abschnitten von Schieberbohrungen in Verbindung stehen, an denen sich die beiden äußeren Stege (53, 55) befinden.

6. Ventilvorrichtung nach Anspruch 5,
dadurch gekennzeichnet, daß
der auf einen der Betätigeranschlüsse (23a) einwirkende Lastdruck durch in den Schiebern (44a, 45a) ausgebildete Kanäle (56, 58, 57) an Rillen (60) übertragen wird, die um den mittleren Stegabschnitt (54) der Schieber (44a, 45a) ausgebildet und mit äußeren Sperrventilen (61) verbunden sind.

7. Ventilvorrichtung nach den Ansprüchen 5 bis 6,
dadurch gekennzeichnet, daß
die in Juxtaposition angeordneten Paare von Schiebern (14a, 15a; 44a, 45a) Wegeventile zur Steuerung eines Paars von Bewegungsmotoren eines Baufahrzeugs bilden.

8. Hydraulisches Antriebssystem mit einer Hydraulikpumpe (30), einer Mehrzahl von hydraulischen Betätigern (32 - 37), die durch von der Hydraulikpumpe zugeführtes Hydraulikfluid angetrieben werden, einer Mehrzahl von Wegeventilen (44a - 45c) des Typs mit geschlossenem Zentrum zum jeweiligen Steuern von Strömen des von der Hydraulikpumpe zu der Mehrzahl von Betätigern zugeführten Hydraulikfluids, und Druckausgleichsmitteln (70) zum Halten eines Differenzdrucks zwischen einem Zufuhrdruck der Hydraulikpumpe und einem maximalen Lastdruck der Betätiger, und ferner mit einer Ventilvorrichtung (10; 40), die die Mehrzahl von Wegeventilen des Typs mit geschlossenem Zentrum liefert und die in Anspruch 1 definierten Merkmale aufweist.

## Revendications

1. Agencement de valve comprenant :
- un corps commun (11 ; 41),
- au moins une paire d'alésages (12a à 13c ; 42a, 43a) de tiroirs disposés de façon mutuellement juxtaposée dans ledit corps (11 ; 41),
- un orifice commun (19) de pompe et au moins un orifice (16t) de réservoir dans ledit corps (11 ; 41),
- une pluralité d'orifices (22a-25c) d'actionneurs, au moins une paire desdits orifices d'actionneurs communiquant avec un desdits alésages de tiroirs et
- une pluralité de tiroirs (14a-15c ; 44a, 45a) disposés de façon coulissante dans lesdits alésages de tiroirs, respectivement, chacun desdits tiroirs commandant une communication entre ledit orifice (19) de pompe, ledit ou lesdits orifice(s) (16t) de réservoirs et la paire correspondante desdits orifices d'actionneurs,
**caractérisé** en ce que :
- une pluralité de paires d'alésages (12a à 13c) de tiroirs sont formés dans le corps (11, 41) de telle sorte que les axes longitudinaux desdites paires d'alésages de tiroirs définissent des plans disposés de façon mutuellement juxtaposée,
- l'orifice commun (19) de pompe communique avec un conduit commun (18) de pompe formé dans le corps (11, 41) entre la pluralité de paires d'alésages (12a à 13c) de tiroirs perpendiculaires auxdits plans des axes longitudinaux desdites paires d'alésages de tiroirs,
- ledit conduit commun (18) de pompe est raccordé à chacun desdits alésages de tiroirs par au moins un conduit de branchement (20a à 21c) respectivement, et
- l'agencement de valve constitue une valve de commande directionnelle du type à centre fermé.

2. Agencement de valve selon la revendication 1, **caractérisé** en ce qu'une paire de conduits (16, 17) de réservoir sont formés dans le corps (11) entre les paires d'alésages (12a à 13c) de tiroirs et sont raccordés à chacun desdits alésages (12a à 13c) de tiroirs par des conduits de branchement (16a à 17b).

3. Agencement de valve selon la revendication 1 ou 2, **caractérisé** en ce que la paire d'orifices (22a-c et 23a-c) d'un alésage de tiroir de chaque paire d'alésages (12a-c) de tiroirs débouchent dans une des surfaces latérale du corps rectangulaire (11) et la paire d'orifices (24a-c ; 25a-c) d'actionneur de l'autre alésage de chaque paire d'alésages (13a-c) de tiroirs débouchent dans la surface latérale opposée du corps (11).

4. Agencement de valve selon l'une quelconque des revendications 1 à 3, **caractérisé** en ce qu'au moins une paire de couvercles (26, 27) sont montés sur une surface latérale du corps (11) pour recouvrir les parties terminales saillantes des tiroirs, respectivement, et dans lesdits couvercles (26, 27) sont montés des ressorts de commutation (28, 29) et des éléments (30, 31) de retenue de ressorts accouplés aux parties d'extrémité saillantes desdits tiroirs.

5. Agencement de valve selon l'une quelconque des revendications 1 à 4, **caractérisé** en ce que le conduit commun (18) de pompe est raccordé à la pluralité de paires d'alésages (42a, 43a) de tiroirs par des paires de conduits de branchement (46a à 49a) et en ce que les portées centrales d'au moins une paire desdits tiroirs (44a, 45a) sont divisées en trois parties de portées (53, 54, 55), lesdits conduits de branchement (46a, 47a ou 48a, 49a) communiquant avec les sections des alésages de tiroirs où se trouvent les deux portées extérieures (53, 55).

6. Agencement de valve selon la revendication 5, **caractérisé** en ce que la pression de charge agissant sur un des orifices (23a) d'actionneur est transmise par l'intermédiaire de passages (56, 58, 57) formés dans les tiroirs (44a, 45a) jusqu'à des gorges (60) formées autour de la partie de portée centrale (54) desdits tiroirs (44a, 45a) et raccordées à des valves extérieures (61) sélectrices de circuit.

7. Agencement de valve selon les revendications 1 à 6 , **caractérisé** en ce que lesdites paires de tiroirs (14a, 15a ; 44a, 45a) disposés de façon mutuellement juxtaposée constituent des valves de commande directionnelles pour commander une paire de moteurs de déplacement d'un engin de construction.

8. Système de commande hydraulique comprenant une pompe hydraulique (30), une pluralité d'actionneurs hydrauliques (32-37) entraînés par un fluide hydraulique fourni par ladite pompe hydraulique, une pluralité de valves de commande directionnelles (44a-45c) du type à centre fermé pour commander respectivement les écoulements du fluide hydraulique fourni à ladite pluralité d'actionneurs par ladite pompe hydraulique, et un moyen (70) de compensation de pression pour maintenir à une valeur prescrite une pression différentielle entre la pression de refoulement de ladite pompe hydraulique et une pression de charge maximale desdits actionneurs, et comprenant, en outre, un agencement de valve (10 ; 40) constituant ladite pluralité de valves de commande directionnelles du type à centre fermé et présentant les caractéristiques telles que définies dans la revendication 1.
